Europäisches Patentamt

European Patent Office

Office européen des brevets

(11) Publication number: **0 591 754 A1**

# EUROPEAN PATENT APPLICATION

(21) Application number: **93115199.7**

(22) Date of filing: **21.09.93**

(30) Priority: **07.10.92 JP 293760/92**

(43) Date of publication of application:
**13.04.94 Bulletin 94/15**

(84) Designated Contracting States:
**DE FR GB**

(51) Int. Cl.5: **B60G 17/015, B60G 17/08**

(71) Applicant: **TOYOTA JIDOSHA KABUSHIKI KAISHA**
**1, Toyota-cho**
**Toyota-shi**
**Aichi-ken 471(JP)**

(72) Inventor: **Yamamoto, Toshiaki**
**4-7-28 Suigen-cho**
**Toyota-shi, Aichi-ken(JP)**

(74) Representative: **KUHNEN, WACKER & PARTNER**
**Alois-Steinecker-Strasse 22**
**D-85354 Freising (DE)**

(54) Vehicle body posture control device.

㊗ In a vehicle equipped with shock absorbers each provided for each vehicle wheel and being controllable independently from one another of damp coefficient for contraction and expansion strokes, a vehicle body posture control device comprises means (M1) for detecting running conditions of the vehicle which induce changes of vehicle body posture, means (M2) for forecasting changes of vehicle body posture based upon the running conditions detected by the means (M1), first control means (M3) for controlling the damp coefficient for the contraction stroke to be relatively high and the damp coefficient for the expansion stroke to be relatively low with respect to the shock absorber for one of the vehicle wheels expected to bound, and second control means (M4) for controlling the damp coefficient for the contraction stroke to be relatively low and the damp coefficient for the expansion stroke to be relatively high with respect to the shock absorber for one of the vehicle wheels expected to rebound.

FIG. 1

EP 0 591 754 A1

Rank Xerox (UK) Business Services
(3.10/3.09/3.3.4)

## Background of the Invention

### Field of the Invention

The present invention relates to a control of vehicle body posture of a vehicle such as an automobile, and more particularly to a vehicle body posture control device of a vehicle.

### Description of the Prior Art

A vehicle body posture control device of a vehicle equipped with shock absorbers controllable of damp coefficient thereof is described in, for example, Japanese Patent Laid-open Publication 63-61619, wherein the damp coefficient of the shock absorber is controlled to increase or decrease based upon vehicle speed and steering angle so that, when a vehicle body rolling is forecast to occur, the damp coefficient is increased to suppress the vehicle body rolling.

According to such a vehicle body posture control device, when a vehicle body rolling is forecast to occur as in a turn of the vehicle, the damp coefficient of all shock absorbers is increased so as to suppress vertical shiftings of the vehicle body, whereby the magnitude of the vehicle body rolling is decreased and the steering stability is improved as compared with the vehicle wherein no such control is done.

However, in such a known vehicle body posture control device, since the increase of the damp coefficient based upon a forecast of vehicle body rolling to occur is applied to the shock absorbers of all vehicle wheels, there is a problem that the riding comfortableness of the vehicle is thereby lowered. Further, when the vehicle has remained so long in a turning state that the centrifugal force exerted to the vehicle body has balanced with the biasing force of the suspension springs, the recovery of the normal vehicle body posture after the turn is delayed due to the increased damp coefficient.

## Summary of the Invention

In view of such problems in the known vehicle body posture control device, it is a primary object of the present invention to provide an improved vehicle body posture control device which improves the riding comfortableness of the vehicle with more effective suppression of changes of vehicle body posture during a turn and/or acceleration or deceleration of the vehicle.

According to the present invention, the above-mentioned object is accomplished by a vehicle body posture control device of a vehicle equipped with shock absorbers each provided for each vehicle wheel and being controllable independently from one another of damp coefficient thereof for contraction and expansion strokes, comprising running condition detection means M1 for detecting running conditions of the vehicle which induce changes of vehicle body posture, vehicle body posture change forecast means M2 for forecasting changes of vehicle body posture based upon the running conditions detected by said running condition detection means, first control means M3 for controlling the damp coefficient for the contraction stroke to be relatively high and the damp coefficient for the expansion stroke to be relatively low with respect to the shock absorber for one of the vehicle wheels expected to bound, and second control means M4 for controlling the damp coefficient for the contraction stroke to be relatively low and the damp coefficient for the expansion stroke to be relatively high with respect to the shock absorber for one of the vehicle wheels expected to rebound.

By the above-mentioned construction, the changes of the vehicle body posture are forecast by the vehicle body posture change forecast means M2 based upon the running conditions detected by the running condition detection means M1, and the damp coefficient of the shock absorber for the contraction stroke is controlled to be relatively high and the damp coefficient of the shock absorber for the expansion stroke is controlled to be relatively low respectively by the first control means M3 with respect to the vehicle wheel expected to bound on the one hand, while on the other hand the damp coefficient of the shock absorber for the contraction stroke is controlled to be relatively low and the damp coefficient of the shock absorber for the expansion stroke is controlled to be relatively high respectively by the second control means M3 with respect to the vehicle wheel expected to rebound. Therefore, the rolling and/or pitching of the vehicle body is effectively suppressed and it is effectively avoided that the clearance between the vehicle wheel and the vehicle body undesirably decreases due to the centrifugal force induced in the vehicle body during a turn and/or acceleration or deceleration of the vehicle.

When the shock absorbers are each controlled in the above-mentioned manner by the first and second control means, the force additionally exerted upward to the vehicle body from the vehicle wheel which is in the bounding state due to a turn and/or acceleration or deceleration of the vehicle and further bounds due to a convex of the road surface is greater than the force additionally exerted upward to the vehicle body from the vehicle wheel which is in the rebounding state due to the turn and/or acceleration or deceleration of the vehicle and bounds due to a convex of the road surface, and similarly, the force additionally exerted downward to the vehicle body from the vehicle wheel which is in the bounding state due to a turn and/or acceleration or deceleration of the vehicle and rebounds due to a concave of the road surface is smaller than the force additionally exerted downward to the vehicle body from the vehicle wheel which is in the rebounding state due to the turn and/or acceleration or deceleration of the vehicle and further rebounds due to a concave of the road surface. Therefore, in either case, the roll moment exerted to the vehicle body due to such further bounding or rebounding of the vehicle wheels due to a concave of a convex of the road surface is oriented to counteract the roll moment exerted to the vehicle body by the centrifugal force due to the turn and/or acceleration or deceleration of the vehicle, thereby further effectively suppressing the changes of vehicle body posture.

Further, by the above-mentioned construction, since the damp coefficient of at least two of the four shock absorbers for four vehicle wheels are controlled to be relatively low during a turn and/or acceleration or deceleration of the vehicle, the riding comfortableness is definitely higher than in the prior art wherein the damp coefficient is increased in all four shock absorbers during a turn and/or acceleration or decelerating of the vehicle.

## Brief Description of the Drawings

In the accompanying drawings,

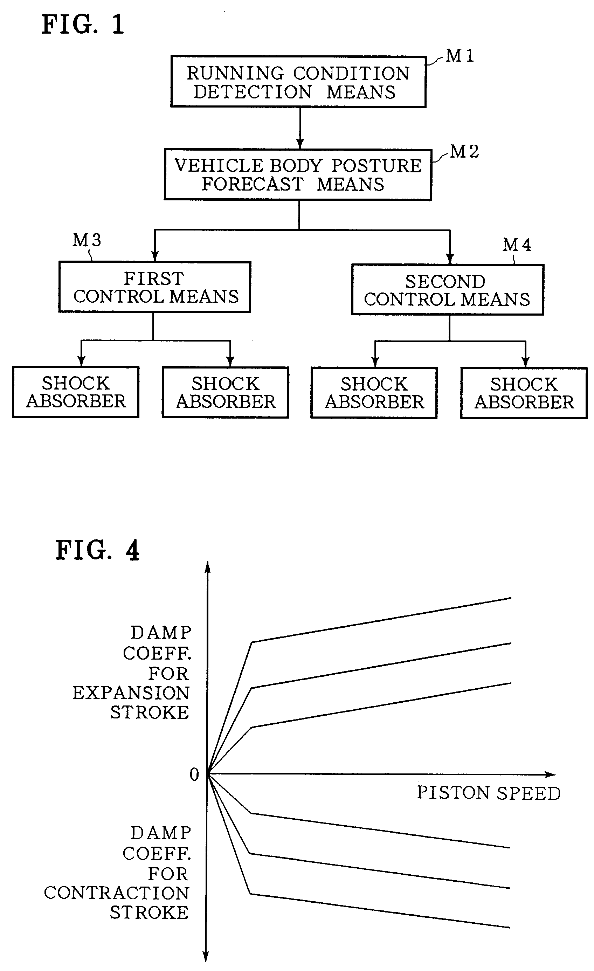

Fig. 1 is a diagram showing the construction of the vehicle body posture control device according to the present invention to correspond to the description of the claim;

Fig. 2 is a generally diagrammatical illustration showing an embodiment of the vehicle body posture control device according to the present invention;

Fig. 3 is a schematic view showing the general construction of the shock absorber shown in Fig. 2.

Fig. 4 is a graph showing the relation between piston speed and damping force in the shock absorber shown in Fig. 3;

Fig. 5 is a block diagram showing an embodiment of the electronic control means shown in Fig. 2;

Fig. 6 is a flowchart showing a main routine for the control of the damp coefficient of the shock absorbers accomplished by the electronic control means shown in Figs. 2 and 3;

Fig. 7 is a flowchart showing a subroutine for calculating the damp coefficient modification amounts for suppression of vehicle body rolling;

Fig. 8 is a flowchart showing a subroutine for calculating the damp coefficient modification amounts for suppression of vehicle body pitching;

Fig. 9 is a graph showing the relation between vehicle speed V and the basic damp coefficient Ccb for the contraction stroke;

Fig. 10 is a graph showing the relation between vehicle speed V and the basic damp coefficient Ccb for the expansion stroke;

Fig. 11 is a graph showing a region in the coordinate of steering angle $\theta$ in the abscissa and vehicle speed V in the ordinate in which the vehicle body rolling becomes greater than a predetermined magnitude;

Fig. 12 is a graph showing the relation among the absolute value of steering angle $\theta$, vehicle speed V and roll inducing force Frs;

Fig. 13 is a graph showing the relation among the absolute value of steering angle velocity $|\dot{\theta}|$, vehicle speed V and roll inducing force Frd;

Fig. 14 is an illustration showing a reverse roll moment acting to the vehicle body due to the bounding of the vehicle wheel caused by a convex of road surface; and

Fig. 15 is an illustration showing a reverse roll moment acting to the vehicle body due to the rebounding of the vehicle wheel caused by a concave of road surface.

## Description of the Preferred Embodiment

In the following the present invention will be described in more detail with respect to a preferred embodiment thereof with reference to the accompanying drawings.

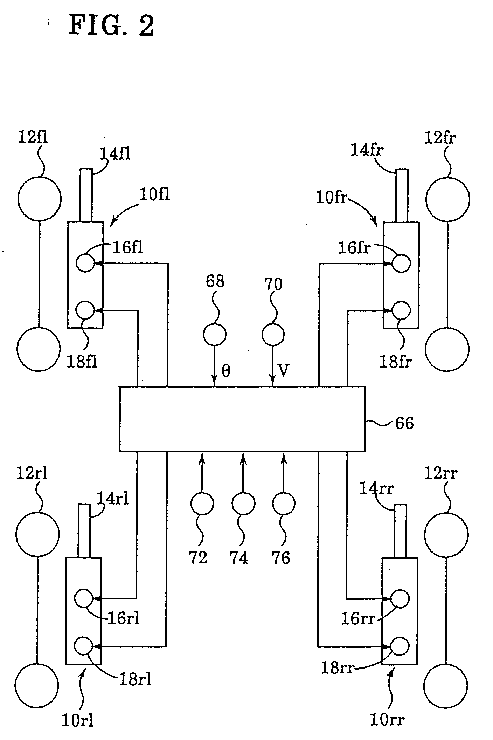

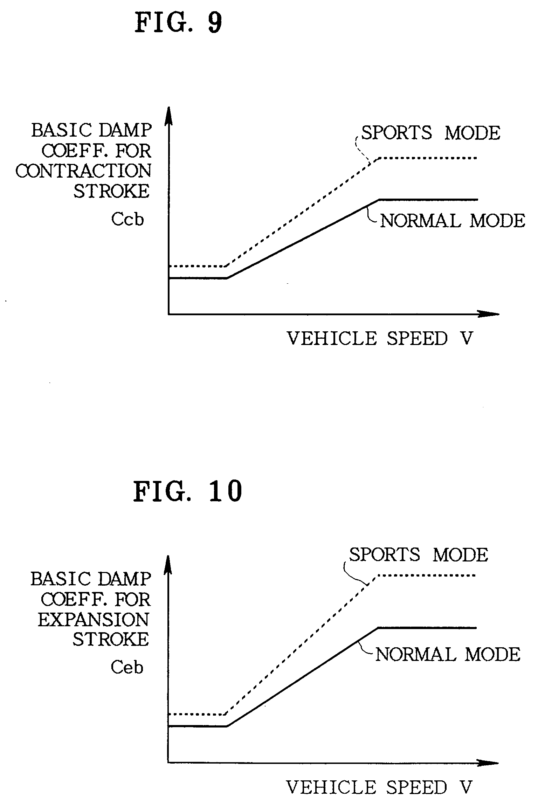

Referring to Fig. 2, 10fr, 10fl, 10rr and 10rl designate damping force variable type shock absorbers provided for front right vehicle 12fr, front left vehicle 12fl, rear right vehicle 12rr and rear left vehicle 12rl, respectively. Although not shown in detail in Fig. 2, the shock absorbers 10fr-10rl have pistons 14fr-14rl in which damping force control valves 16fr-16rl are incorporated for controlling the damping force in the expansion stroke, and cylinder bodies in which damping force control valves 18fr-18rl are incorporated for controlling the damping force in the contraction stroke, respectively, wherein the damping force in the expansion stroke is controlled by the opening amount of the control valves 16fr-16rl, while the damping force in the contraction stroke is controlled by the opening amount of the control valves 18fr-18rl.

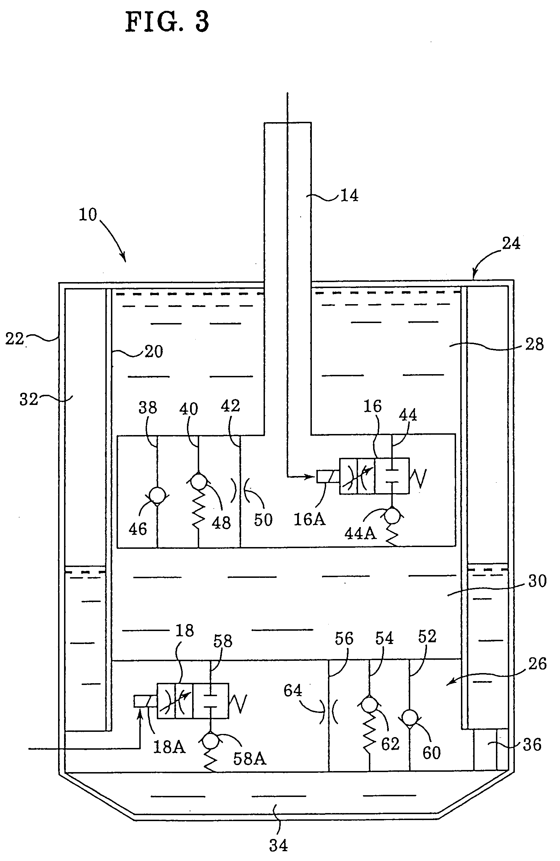

As is shown schematically in Fig. 3, the cylinder body 24 of each shock absorber 10 comprises an inner cylinder 22 and an outer cylinder 24, while the piston 14 is slidably received in the inner cylinder 22 to reciprocate in the longitudinal direction therein. A base valve assembly 26 is mounted to the bottom of the cylinder body. An upper cylinder chamber 28 is defined above the piton 14, while a lower cylinder chamber 30 is defined below the piton 14 and above the base valve assembly 26. Further, a reservoir chamber 32 is defined between the inner cylinder 20 and the outer cylinder 22. Finally, a base valve chamber 34 is defined below the base valve assembly 26 within the cylinder body. The reservoir chamber 32 is in communication with the base valve chamber 34 through a connection passage 36 provided in the base valve assembly 26.

The piston 14 is formed with first through third connection passages 38-42 and a bypass chamber 44 for communicating the upper cylinder chamber 28 and the lower cylinder chamber 30 with one another. A non return valve 46 is provided in the first connection passage 38 so as to allow fluid to flow therethrough only from the lower cylinder chamber 30 to the upper cylinder chamber 28. A spring-biased non return valve 48 is provided in the second connection passage 40 so as to allow fluid to flow therethrough only from the upper cylinder chamber 28 to the lower cylinder chamber 30. A fixed throttling means 50 is provided in the third connection passage 42. The damping force control valve 16 is provided in the bypass passage 44 in series with a spring-biased non return valve 44A which allows fluid to flow therethrough only from the upper cylinder chamber 28 to the lower cylinder chamber 30. In the shown embodiment, the damping force control valve 16 is a normally closed type shutoff valve which is variably opened according to the voltage of electric current supplied to its solenoid 16A, so as to control the damping force of the shock absorber in the expansion stroke.

Similarly, the base valve assembly 26 is formed with first through third connection passages 52-56 and a bypass passage 58 for communicating the lower cylinder chamber 30 and the base valve chamber 34 with one another. A non return valve 60 is provided in the first connection passage 52 so as to allow fluid to flow therethrough only from the base valve chamber 34 to the lower cylinder chamber 30. A spring-biased non return valve 62 is provided in the second connection passage 54 so as to allow fluid to flow therethrough only from the lower cylinder chamber 30 to the base valve chamber 34. A fixed throttling means 64 is provided in the third connection passage 56. The damping force control valve 18 is provided in the bypass passage 58 in series with a spring-biased non return valve 58A which allows fluid to flow therethrough only from the lower cylinder chamber 30 to the base valve chamber 34. In the shown embodiment, the damping force control valve 18 is also a normally closed type shutoff valve which is variably opened according to the voltage of electric current supplied to its solenoid 18A, so as to control the damping force of the shock absorber in the contraction stroke.

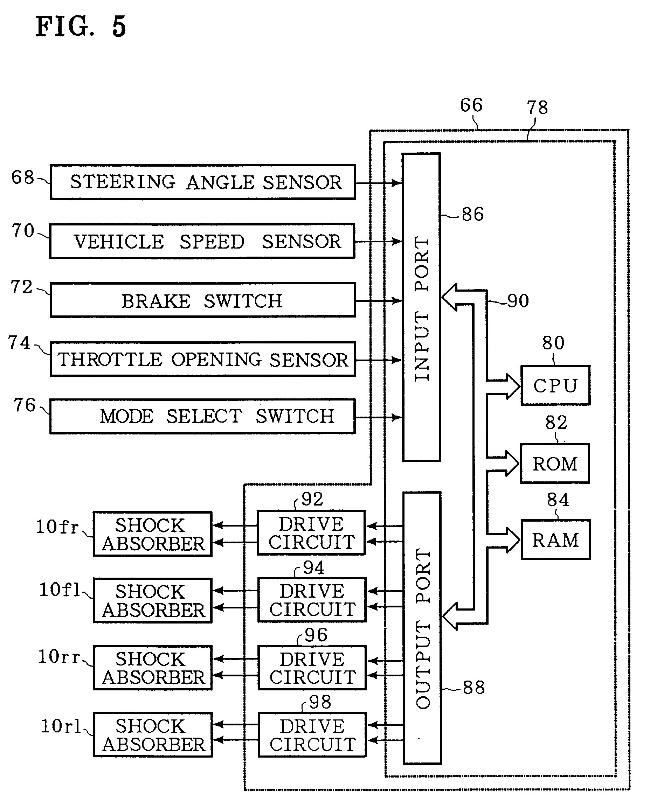

Thus, each shock absorber can provide a damping force in each of the expansion stroke and the contraction stroke independently from one another in a substantially continuously variable manner according to the control of the opening of the damping force control valve 16 for controlling the expansion stroke and that of the damping force control valve 18 for controlling the contraction stroke, as exemplarily shown in Fig. 4, wherein such overall performance is shown by several separate performance curves.

The damping force control valves 16fr-16rl and 18fr-18rl are controlled by an electronic control means 66 shown in more detail in Fig. 5 which is supplied with input signals with respect to steering angle $\theta$ (expressed to be positive hereinunder when a vehicle makes a right turn) detected by a steering angle sensor 68, vehicle speed V detected by a vehicle speed sensor 70, braking condition detected by a brake switch 72, throttle opening detected by a throttle opening sensor 74, and selection between a normal mode operation of the shock absorber which places preference on the riding comfortableness of the vehicle and a sports mode operation of the shock absorber which places preference on the steering stability of the vehicle set by a mode selection switch 76.

The electronic control means 66 comprises a micro computer 78 which may be of a common construction as shown in Fig. 5, including a central processing unit (CPU) 80, a read only memory (ROM) 82, a random access memory (RAM) 84, an input port means 86, an output port means 88 and a bilateral common bus 90 interconnecting these units.

The input signals with respect to steering angle $\theta$ from the steering angle sensor 68, vehicle speed V from the vehicle speed sensor 70, braking condition from the brake switch 72, throttle opening from the throttle opening sensor 74, and selection between the normal mode operation and the sports mode operation from the mode selection switch 76 are supplied to the input port means 86, which processes these input signals and supplies the processed signals to CPU 80 and RAM 84 according to the instructions of CPU based upon programs stored in ROM 82.

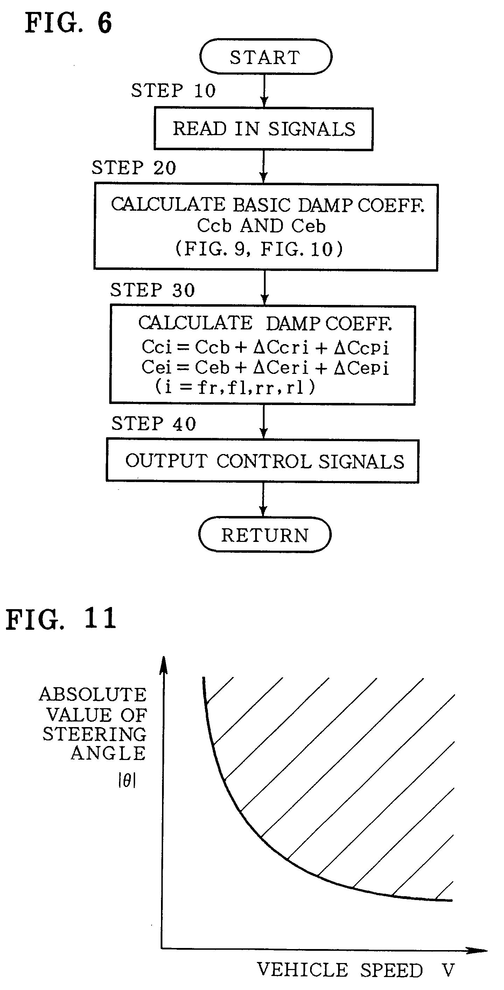

ROM 82 stores control programs for carrying out such control steps as shown in Figs. 6-8 and maps representing such graphs as shown in Figs. 9-11. CPU 80 carries out signal processing and calculations according to the control programs shown in Figs. 6-8, so as thereby to generate output control signals at the output port means 88 for controlling the damp coefficients of the respective shock absorbers through corresponding drive circuits 92-98.

In the following, the vehicle body posture control according to the shown embodiment of the present invention will be described with reference to the flowcharts shown in Figs. 6-8.

First referring to Fig. 6 showing a main routine, in step 10, the signal showing vehicle speed V and the signal showing the selection of the operation mode of the shock absorbers are read in from the vehicle speed sensor 70 and the mode selection switch 76, respectively. Of course, as is conventional in the art, RAM 84, etc. are initialized as required before starting step 10.

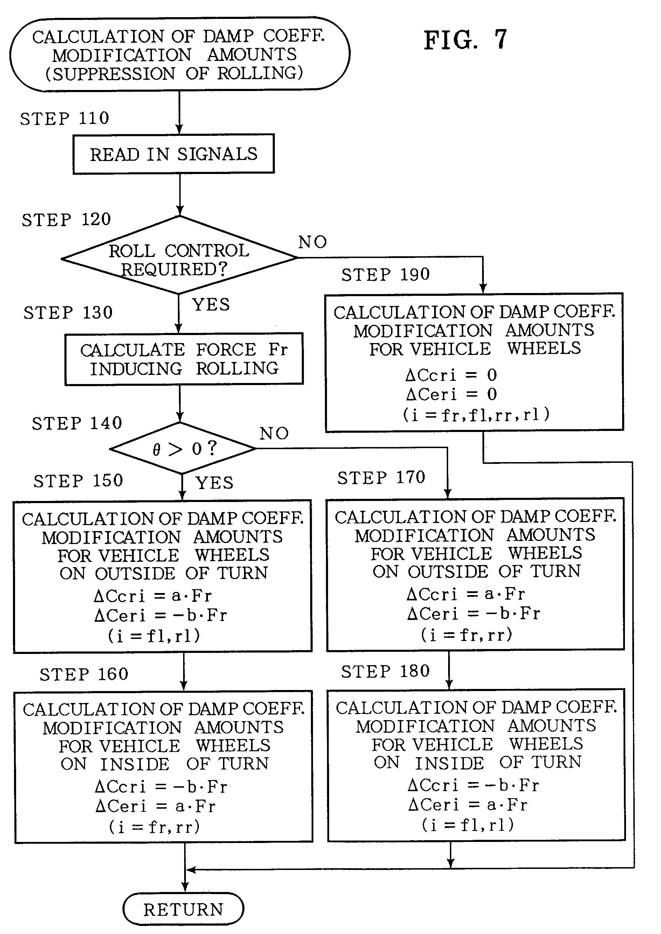

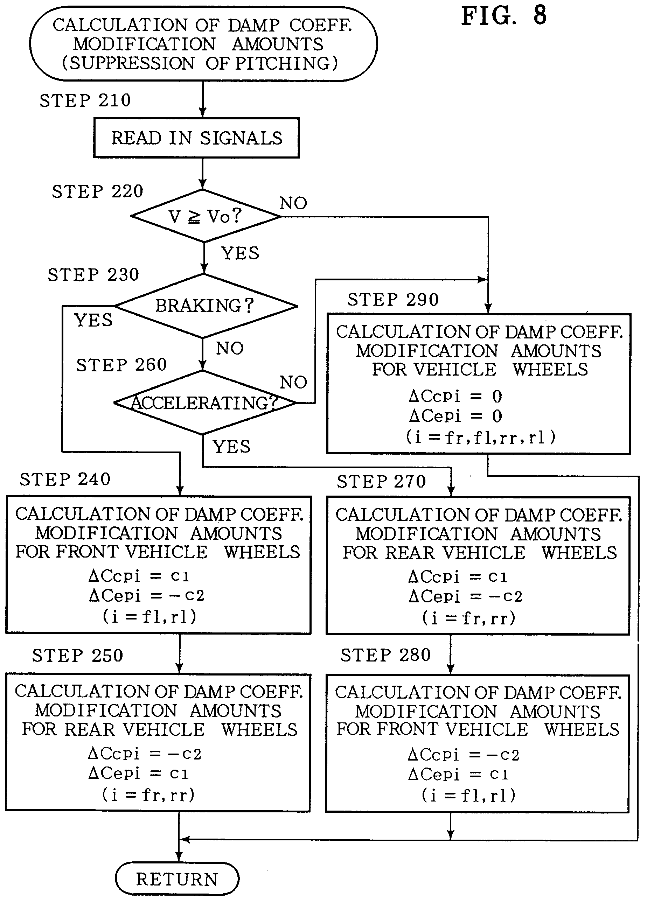

In step 20, based upon the maps representing such graphs as shown in Figs. 9 and 10, a basic damp coefficient Ccb for the shock absorbers to operate in the contraction stroke and a basic damp coefficient Ceb for the shock absorbers to operate in the expansion stroke are calculated. Then, in step 30, damp coefficients Cci and Cei for the shock absorbers to operate in the contraction stroke and the expansion stroke are calculated as the sum of the basic damp coefficients Ccb and Ceb, first damp coefficient modification amounts $\Delta$Ccri and $\Delta$Ceri calculated by a subroutine for modification of damp coefficient for suppression of vehicle body rolling such as shown in Fig. 7 and described hereinunder, and second damp coefficient modification amounts $\Delta$Ccpi and $\Delta$Cepi calculated by a subroutine for modification of damp coefficient for suppression of vehicle body pitching such as shown in Fig. 8 and described hereinunder, respectively.

In step 40, control signals representing the damp coefficients Cci and Cei thus calculated are output toward the damping force control valves 16fr-16rl and 18fr-18rl so that the respective shock absorbers are operated with such corresponding damp coefficients either in the contraction or expansion stroke.

The damp coefficient modification amounts $\Delta$Ccri and $\Delta$Ceri for suppression of vehicle body rolling are calculated by the subroutine shown in Fig. 7, while the damp coefficient modification amounts $\Delta$Ccpi and $\Delta$Cepi for suppression of vehicle body pitching are calculated by the subroutine shown in Fig. 8.

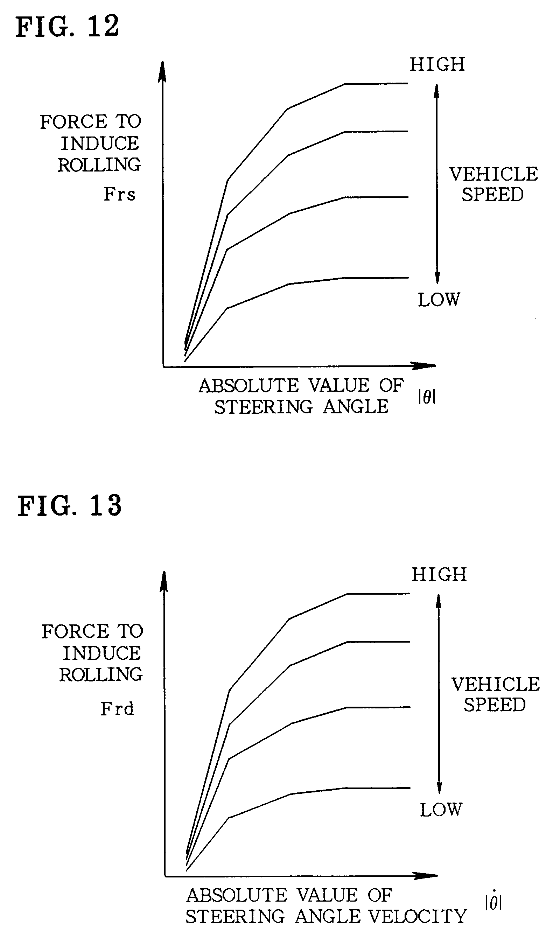

In the subroutine shown in Fig. 7 for the modification of damp coefficient for suppression of vehicle body rolling, in step 110, signals representing steering angle $\theta$ detected by the steering angle sensor 68 and vehicle speed V detected by the vehicle speed sensor 70 are read in. Then, in step 120, based upon a map representing a graph such as shown in Fig. 11, it is judged if the point of coordinate of the vehicle speed V and the steering angle $\theta$ is in the hatched region of Fig. 11. If it is in the hatched region, it means that the damp coefficient control for the shock absorbers is required to suppress the rolling of the vehicle body. If the answer is yes, the control process proceeds to step 130, where force Fr expected to act in the vehicle body to induce its rolling is calculated.

The calculation of the force Fr in step 130 may be a mathematical calculation based upon a function of vehicle speed V, absolute value of steering angle $|\theta|$, and absolute value of steering angle velocity $|\dot{\theta}|$. Alternatively, the force Fr may be obtained as the sum of Frs to generate vehicle body rolling obtained from such a map as shown in Fig. 12 and Frd to generate vehicle body rolling obtained from such a map as shown in Fig. 13.

In step 140, it is judged if the steering angle is positive, i.e., if the vehicle is making a right turn. If the answer is yes, the control process proceeds to step 150, where the damp coefficient modification amounts $\Delta$Ccri for the contraction stroke and $\Delta$Ceri for the expansion stroke are calculated with respect to the shock absorbers for the vehicle wheels on the outside of the turn, i.e. i = fl and i = rl, according to the following formulae 1 and 2, respectively, and then in step 160, the damp coefficient modification amounts $\Delta$Ccri for the contraction stroke and $\Delta$Ceri for the expansion stroke are calculated with respect to the shock absorbers for the vehicle wheels on the inside of the turn, i.e. i = fr and i = rr, according to the following formulae 3 and 4, respectively, wherein $a$ and $b$ are positive constants:

$$\Delta Ccri = a \cdot Fr \qquad (1)$$

$$\Delta Ceri = -b \cdot Fr \qquad (2)$$

$$\Delta Ccri = -b \cdot Fr \qquad (3)$$

$$\Delta Ceri = a \cdot Fr \qquad (4)$$

If the answer in step 140 is no, i.e. the vehicle is making a left turn, the control process proceeds to step 170, where the damp coefficient modification amounts $\Delta$Ccri for the contraction stroke and $\Delta$Ceri for the expansion stroke are calculated with respect to the shock absorbers for the vehicle wheels on the outside of the turn, i.e. i = fr and i = rr, according to the above formulae 1 and 2, respectively, and then in step 180, the damp coefficient modification amounts $\Delta$Ccri for the contraction stroke and $\Delta$Ceri for the expansion stroke are calculated with respect to the shock absorbers for the vehicle wheels on the inside of the turn, i.e. i = fl and i = rl, according to the above formulae 3 and 4, respectively.

If the answer in step 120 is no, i.e. no control of the damp coefficient for suppression of vehicle body rolling is required with respect to the shock absorbers 10fr-10rl, then the control process proceeds to step 190, where the damp coefficient modification amounts $\Delta Ccri$ for the contraction stroke and $\Delta Ceri$ for the expansion stroke are reset to zero with respect to all of the shock absorbers 10fr-10rl.

In the subroutine shown in Fig. 8 for the modification of damp coefficient for suppression of vehicle body pitching, in step 210, signals representing the braking condition detected by the brake switch 72 and the throttle opening detected by the throttle opening sensor 74 are read in. Then, in step 220, it is judged if the vehicle speed V is equal to or greater than a predetermined threshold value Vo (positive value). If the answer is yes, the control process proceeds to step 230, and it is judged if the vehicle is under braking, i.e. if the brake switch 72 is on.

If the answer in step 230 is yes, i.e. the vehicle is under braking, the control process proceeds to step 240, where the damp coefficient modification amounts $\Delta Ccpi$ for the contraction stroke and $\Delta Cepi$ for the expansion stroke are calculated with respect to the shock absorbers for the front vehicle wheels, i.e. i = fr and i = fl, according to the following formulae 5 and 6, respectively, and then in step 250, the damp coefficient modification amounts $\Delta Ccpi$ for the contraction stroke and $\Delta Cepi$ for the expansion stroke are calculated with respect to the shock absorbers for the rear vehicle wheels, i.e. i = rr and i = rl, according to the following formulae 7 and 8, respectively, wherein c1 and c2 are positive constants:

$$\Delta Ccpi = c1 \quad (5)$$

$$\Delta Cepi = -c2 \quad (6)$$

$$\Delta Ccpi = -c2 \quad (7)$$

$$\Delta Cepi = c1 \quad (8)$$

If the answer in step 220 or 230 is no, the control process proceeds to step 260, where it is judged if the vehicle is being accelerated. It may be judged by the differentiation of throttle opening being greater than a predetermined value that the vehicle is being accelerated. If the answer in step 260 is yes, the control process proceeds to step 270, where the damp coefficient modification amounts $\Delta Ccpi$ for the contraction stroke and $\Delta Cepi$ for the expansion stroke are calculated with respect to the shock absorbers for the rear vehicle wheels, i.e. i = rr and i = rl, according to the above formulae 5 and 6, respectively, and then in step 280, the damp coefficient modification amounts $\Delta Ccpi$ for the contraction stroke and $\Delta Cepi$ for the expansion stroke are calculated with respect to the shock absorbers for the front vehicle wheels, i.e.

i = fr and i = fl, according to the above formulae 7 and 8, respectively.

If the answer in step 220 is no, i.e. the vehicle is not running at such relatively high speed as to require the suspension control, or if the answer in step 260 is no, i.e. the vehicle is being neither braked nor accelerated, then the control process proceeds to step 290, where the damp coefficient modification amounts $\Delta Ccpi$ for the contraction stroke and $\Delta Cepi$ for the expansion stroke are reset to zero with respect to all of the shock absorbers 10fr-10rl. Thus, when the vehicle is running straight forward at a substantially constant vehicle speed, the answer in step 120 is no, and therefore the damp coefficient modification amounts $\Delta Ccri$ and $\Delta Ceri$ for suppression of vehicle body rolling are reset to zero, and further, the answers in steps 230 and 260 are both no, so that the damp coefficient modification amounts $\Delta Ccpi$ and $\Delta Cepi$ for suppression of vehicle body pitching are also reset to zero. In this case, therefore, the damp coefficient modification amounts $\Delta Cci$ for the contraction stroke and $\Delta Cei$ for the expansion stroke are controlled according to the control mode selected by the mode selection switch 76 and the vehicle speed detected by the vehicle speed sensor 70. Thus, a high comfortableness is ensured in low to medium speed running of the vehicle, while a high steering stability is ensured in medium to high speed running of the vehicle, modified according to the taste of the driver.

Thus, summarizing, during a turn of the vehicle, the answer in step 120 is yes, and in step 130, the force Fr to induce a rolling of the vehicle body is calculated, and then in step 140, it is judges if the turn is a right turn or a left turn. In steps 150-180, the damp coefficient modification amounts $\Delta Ccri$ for the contraction stroke and $\Delta Ceri$ for the expansion stroke of the shock absorbers for the vehicle wheels on the outside of the turn are calculated to be $a \cdot Fr$ and $-b \cdot Fr$, respectively, while the damp coefficient modification amounts $\Delta Ccri$ for the contraction stroke and $\Delta Ceri$ for the expansion stroke of the shock absorbers for the vehicle wheels on the inside of the turn are calculated to be $-b \cdot Fr$ and $a \cdot Fr$, respectively, so that the damp coefficients for the contraction stroke are relatively high while the damp coefficients for the expansion stroke are relatively low with respect to the shock absorbers for the vehicle wheels on the outside of the turn, i.e. bounding vehicle wheels, on the one hand, while on the other hand the damp coefficients for the expansion stroke are relatively high while the damp coefficients for the contraction stroke are relatively low with respect to the shock absorbers for the vehicle wheels on the inside of the turn, i.e. rebounding vehicle wheels. By this arrangement, it is effectively avoided that the clearance between the vehicle wheel and the vehicle body undesirably decreases on the outside of a turn due to the centrifugal force applied to the vehicle body during the turn of the vehicle.

When the vehicle is being braked, the answer in step 230 is yes, and then in steps 240 and 250, the damp coefficient modification amounts $\Delta Ccpi$ for the contraction stroke and the damp coefficient modification amounts $\Delta Cepi$ for the expansion stroke with respect to the shock absorbers for the front vehicle wheels are set to c1 and - c2, respectively, while the damp coefficient modification amounts $\Delta Ccpi$ for the contraction stroke and the damp coefficient modification amounts $\Delta Cepi$ for the expansion stroke with respect to the shock absorbers for the rear vehicle wheels are set to -c2 and c1, respectively. When the vehicle is being accelerated, the answer is step 260 is yes, and then in steps 270 and 280, the damp coefficient modification amounts $\Delta Ccpi$ for the contraction stroke and the damp coefficient modification amounts $\Delta Cepi$ for the expansion stroke with respect to the shock absorbers for the rear vehicle wheels are set to c1 and -c2, respectively, while the damp coefficient modification amounts $\Delta Ccpi$ for the contraction stroke and the damp coefficient modification amounts $\Delta Cepi$ for the expansion stroke with respect to the shock absorbers for the front vehicle wheels are set to -c2 and c1, respectively.

Therefore, during acceleration or braking (more generally, deceleration) of the vehicle, the damp coefficient for the contraction stroke is made relatively high and the damp coefficient for the expansion stroke is made relatively low with respect to the shock absorbers for the vehicle wheels bounding due to a longitudinal inertial force caused by acceleration or deceleration, while the damp coefficient for the contraction stroke is made relatively low and the damp coefficient for the expansion stroke is made relatively high with respect to the shock absorbers for the vehicle wheels rebounding due to a longitudinal inertial force caused by acceleration or deceleration. Therefore, the bounding or rebounding of the vehicle body in the longitudinal direction, i.e. the so-called nose diving or squatting of the vehicle body, due to acceleration or deceleration is effectively suppressed.

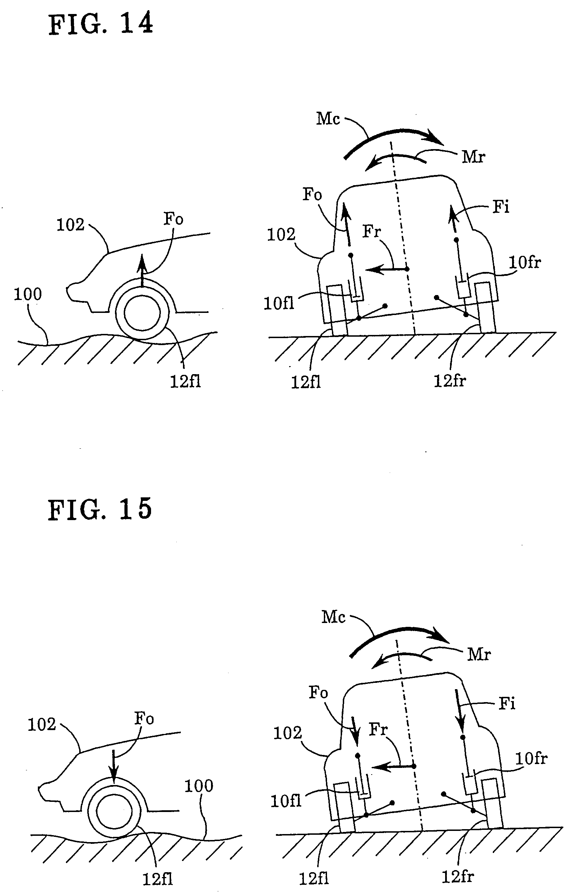

Further, as the damp coefficient for the contraction stroke is made relatively high for the vehicle wheels on the outside of a turn as compared with that for the vehicle wheels on the inside of the turn, another particular advantage is available such that, When, for example, a pair of front vehicle wheels 12fr and 12fl bound due to a convex of the road surface 100 as illustrated in Fig. 14, a first additional force Fo is applied as oriented upward to the vehicle body at an outside portion of the vehicle body in the turn, while a second additional force Fi is applied as oriented upward to the vehicle body at an inside portion of the vehicle body in the turn, wherein Fo is greater than Fi, and therefore a roll moment Mr is available as oriented to counteract the roll moment Mc due to the centrifugal force Fr.

Similarly, as the damp coefficient for the expansion stroke is made relatively low for the vehicle wheels on the outside of a turn as compared with that for the vehicle wheels on the inside of the turn, still another particular advantage is available such that, When, for example, a pair of front vehicle wheels 12fr and 12fl rebound due to a concave of the road surface 100 as illustrated in Fig. 15, a first additional force Fo is applied as oriented downward to the vehicle body at an outside portion of the vehicle body in the turn, while a second additional force Fi is applied as oriented downward to the vehicle body at an inside portion of the vehicle body in the turn, wherein Fo is smaller than Fi, and therefore a roll moment Mr is also available as oriented to counteract the roll moment Mc due to the centrifugal force Fr.

Further, since at least two of the four shock absorbers for four vehicle wheels are set for a low damp coefficient during any of turn, acceleration and deceleration, the riding comfortableness is definitely improved as compared with such a prior art control wherein the damp coefficient is made higher for all shock absorbers during a turn or an acceleration or deceleration.

Although the modification amounts c1 and c2 for the damp coefficient during acceleration or braking were made constant in the embodiment described above, these modification amounts may be varied according to the longitudinal acceleration of the vehicle body so that it is increased or decreased as the degree of acceleration or braking increases or decreases.

Further, although the basic damp coefficients Ccb for the contraction stroke and the basic damp coefficient Ceb for the expansion stroke are calculated according to the control mode selected by the mode selection switch 76 and the vehicle speed V detected by the vehicle speed sensor 70 in the embodiment described above, these basic damp coefficients may be calculated in any other appropriate manner.

Further, although the damp coefficient for the contraction stroke and the damp coefficient for the expansion stroke are controlled by varying the degree of opening of the fluid passages incorporated in the piston and the base valve assembly in the embodiment described above, any shock absorber having other appropriate construction for varying its damp coefficient is usable for carrying out the present invention as long as the damp coefficient for the contraction stroke and the damp coefficient for the expansion stroke are controllable independently from one another.

Although the present invention has been described in detail in the above with respect to a particular embodiment thereof, it will be apparent for those skilled in the art that various changes, omissions and other modifications are possible with respect to the shown embodiment without departing from the scope of the present invention.

## Claims

1. A vehicle body posture control device of a vehicle equipped with shock absorbers each provided for each vehicle wheel and being controllable independently from one another of damp coefficient thereof for contraction and expansion strokes, comprising running condition detection means for detecting running conditions of the vehicle which induce changes of vehicle body posture, vehicle body posture change forecast means for forecasting changes of vehicle body posture based upon the running conditions detected by said running condition detection means, first control means for controlling the damp coefficient for the contraction stroke to be relatively high and the damp coefficient for the expansion stroke to be relatively low with respect to the shock absorber for one of the vehicle wheels expected to bound, and second control means for controlling the damp coefficient for the contraction stroke to be relatively low and the damp coefficient for the expansion stroke to be relatively high with respect to the shock absorber for one of the vehicle wheels expected to rebound.

2. A vehicle body posture control device according to claim 1, wherein said running condition detection means detects steering angle and vehicle speed, said vehicle body posture change forecast means forecasts a vehicle body rolling due to a turn of the vehicle, and said first control means controls the damp coefficient for the contraction stroke to be relatively high and the damp coefficient for the expansion stroke to be relatively low with respect to the shock absorber for the vehicle wheel on the outside of the turn, while said second control means controls the damp coefficient for the contraction stroke to be relatively low and the damp coefficient for the expansion stroke to be relatively high with respect to the shock absorber for the vehicle wheel on the inside of the turn.

3. A vehicle body posture control device according to claim 1, wherein said running condition detection means detects acceleration of the vehicle, said vehicle body posture change forecast means forecasts a vehicle body pitching due to the acceleration of the vehicle, and said first control means controls the damp coefficient for the contraction stroke to be relatively high and the damp coefficient for the expansion stroke to be relatively low with respect to the shock absorber for front one the vehicle wheels, while said second control means controls the damp coefficient for the contraction stroke to be relatively low and the damp coefficient for the expansion stroke to be relatively high with respect to the shock absorber for rear one of the vehicle wheels.

4. A vehicle body posture control device according to claim 1, wherein said running condition detection means detects braking of the vehicle, said vehicle body posture change forecast means forecasts a vehicle body pitching due to the braking of the vehicle, and said first control means controls the damp coefficient for the contraction stroke to be relatively high and the damp coefficient for the expansion stroke to be relatively low with respect to the shock absorber for rear one the vehicle wheels, while said second control means controls the damp coefficient for the contraction stroke to be relatively low and the damp coefficient for the expansion stroke to be relatively high with respect to the shock absorber for front one of the vehicle wheels.

5. A vehicle body posture control device according to claim 2, wherein said first control means controls the damp coefficient for the contraction stroke to be relatively high and the damp coefficient for the expansion stroke to be relatively low with respect to the shock absorber for the vehicle wheel on the outside of the turn, while said second control means controls the damp coefficient for the contraction stroke to be relatively low and the damp coefficient for the expansion stroke to be relatively high with respect to the shock absorber for the vehicle wheel on the inside of the turn when a point of coordinate of the vehicle speed and the steering angle is in a predetermined region forecasting a substantial vehicle body rolling to occur.

# FIG. 1

RUNNING CONDITION DETECTION MEANS — M1

VEHICLE BODY POSTURE FORECAST MEANS — M2

M3 — FIRST CONTROL MEANS

M4 — SECOND CONTROL MEANS

SHOCK ABSORBER

SHOCK ABSORBER

SHOCK ABSORBER

SHOCK ABSORBER

# FIG. 4

DAMP COEFF. FOR EXPANSION STROKE

PISTON SPEED

DAMP COEFF. FOR CONTRACTION STROKE

# FIG. 2

## FIG. 3

# FIG. 5

## FIG. 6

```
                    ┌─────────────┐
                    │    START    │
                    └─────────────┘
STEP 10                    │
                           ▼
              ┌──────────────────────────┐
              │      READ IN SIGNALS      │
              └──────────────────────────┘
STEP 20                    │
                           ▼
    ┌──────────────────────────────────────────┐
    │      CALCULATE BASIC DAMP COEFF.          │
    │            Ccb AND Ceb                     │
    │          (FIG. 9, FIG. 10)                 │
    └──────────────────────────────────────────┘
STEP 30                    │
                           ▼
    ┌──────────────────────────────────────────┐
    │       CALCULATE  DAMP COEFF.              │
    │   Cci = Ccb + ΔCcri + ΔCcpi              │
    │   Cei = Ceb + ΔCeri + ΔCepi              │
    │      (i = fr, fl, rr, rl)                  │
    └──────────────────────────────────────────┘
STEP 40                    │
                           ▼
    ┌──────────────────────────────────────────┐
    │      OUTPUT CONTROL SIGNALS               │
    └──────────────────────────────────────────┘
                           │
                           ▼
                    ┌─────────────┐
                    │   RETURN    │
                    └─────────────┘
```

$$Cc_i = Cc_b + \Delta Cc_{ri} + \Delta Cc_{pi}$$
$$Ce_i = Ce_b + \Delta Ce_{ri} + \Delta Ce_{pi}$$
$$(i = fr, fl, rr, rl)$$

## FIG. 11

ABSOLUTE VALUE OF STEERING ANGLE $|\theta|$

VEHICLE SPEED V

13

# FIG. 7

CALCULATION OF DAMP COEFF.
MODIFICATION AMOUNTS
(SUPPRESSION OF ROLLING)

STEP 110

READ IN SIGNALS

STEP 120

ROLL CONTROL REQUIRED? — NO

STEP 130 — YES

CALCULATE FORCE Fr INDUCING ROLLING

STEP 190

CALCULATION OF DAMP COEFF.
MODIFICATION AMOUNTS
FOR VEHICLE WHEELS

$\Delta Ccri = 0$
$\Delta Ceri = 0$
$(i = fr, fl, rr, rl)$

STEP 140

$\theta > 0?$ — NO

STEP 150 — YES

CALCULATION OF DAMP COEFF.
MODIFICATION AMOUNTS
FOR VEHICLE WHEELS
ON OUTSIDE OF TURN

$\Delta Ccri = a \cdot Fr$
$\Delta Ceri = -b \cdot Fr$
$(i = fl, rl)$

STEP 170

CALCULATION OF DAMP COEFF.
MODIFICATION AMOUNTS
FOR VEHICLE WHEELS
ON OUTSIDE OF TURN

$\Delta Ccri = a \cdot Fr$
$\Delta Ceri = -b \cdot Fr$
$(i = fr, rr)$

STEP 160

CALCULATION OF DAMP COEFF.
MODIFICATION AMOUNTS
FOR VEHICLE WHEELS
ON INSIDE OF TURN

$\Delta Ccri = -b \cdot Fr$
$\Delta Ceri = a \cdot Fr$
$(i = fr, rr)$

STEP 180

CALCULATION OF DAMP COEFF.
MODIFICATION AMOUNTS
FOR VEHICLE WHEELS
ON INSIDE OF TURN

$\Delta Ccri = -b \cdot Fr$
$\Delta Ceri = a \cdot Fr$
$(i = fl, rl)$

RETURN

14

# FIG. 8

CALCULATION OF DAMP. COEFF.
MODIFICATION AMOUNTS
(SUPPRESSION OF PITCHING)

STEP 210

READ IN SIGNALS

STEP 220

$V \geqq Vo?$ —— NO

YES

STEP 230

BRAKING? —— NO

YES

STEP 260

ACCELERATING? —— NO

YES

STEP 290

CALCULATION OF DAMP COEFF.
MODIFICATION AMOUNTS
FOR VEHICLE WHEELS

$\Delta Ccpi = 0$
$\Delta Cepi = 0$
$(i = fr, fl, rr, rl)$

STEP 240

CALCULATION OF DAMP COEFF.
MODIFICATION AMOUNTS
FOR FRONT VEHICLE WHEELS

$\Delta Ccpi = c_1$
$\Delta Cepi = -c_2$
$(i = fl, rl)$

STEP 270

CALCULATION OF DAMP COEFF.
MODIFICATION AMOUNTS
FOR REAR VEHICLE WHEELS

$\Delta Ccpi = c_1$
$\Delta Cepi = -c_2$
$(i = fr, rr)$

STEP 250

CALCULATION OF DAMP COEFF.
MODIFICATION AMOUNTS
FOR REAR VEHICLE WHEELS

$\Delta Ccpi = -c_2$
$\Delta Cepi = c_1$
$(i = fr, rr)$

STEP 280

CALCULATION OF DAMP COEFF.
MODIFICATION AMOUNTS
FOR FRONT VEHICLE WHEELS

$\Delta Ccpi = -c_2$
$\Delta Cepi = c_1$
$(i = fl, rl)$

RETURN

15

# FIG. 9

BASIC DAMP
COEFF. FOR
CONTRACTION
STROKE
Ccb

SPORTS MODE

NORMAL MODE

VEHICLE SPEED V

# FIG. 10

BASIC DAMP
COEFF. FOR
EXPANSION
STROKE
Ceb

SPORTS MODE

NORMAL MODE

VEHICLE SPEED V

## FIG. 12

FORCE TO
INDUCE
ROLLING

Frs

HIGH

VEHICLE
SPEED

LOW

ABSOLUTE VALUE OF
STEERING ANGLE $|\theta|$

## FIG. 13

FORCE TO
INDUCE
ROLLING

Frd

HIGH

VEHICLE
SPEED

LOW

ABSOLUTE VALUE OF
STEERING ANGLE VELOCITY $|\dot{\theta}|$

17

FIG. 14

FIG. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 367 949 (DAIMLER-BENZ)<br>* column 9, line 19 - column 10, line 29; figures * | 1-4 | B60G17/015<br>B60G17/08 |
| A | EP-A-0 172 272 (TOYOTA)<br>* claims 8-10; figures 2,5 * | 1-5 | |
| A | GB-A-2 221 878 (NISSAN)<br>* page 12, line 10 - page 13, line 22 *<br>* page 22, line 22 - line 28; figures 1,3,6,7 * | 1,2 | |
| A | DE-A-4 027 998 (NISSAN)<br>* the whole document * | 1-4 | |
| A | US-A-4 909 534 (FUKUSHIMA ET AL.)<br>* abstract * | 1,3,4 | |
| A | DE-A-4 007 261 (BOGE)<br>* column 2, line 38 - line 66; figures * | 1 | |
| A | FR-A-2 626 820 (BOGE)<br>* claims 1,2; figures * | 1 | TECHNICAL FIELDS SEARCHED (Int. Cl.5 )<br><br>B60G |
| A | EP-A-0 197 316 (BOSCH) | | |

-----

The present search report has been drawn up for all claims

| Place of search | Date of completion of the search | Examiner |
|---|---|---|
| BERLIN | 17 JANUARY 1994 | KRIEGER Ph. |

EPO FORM 1503 03.82 (P0401)